Europäisches Patentamt

European Patent Office

Office européen des brevets

(19)

(11) Publication number: **0 412 334 A1**

# EUROPEAN PATENT APPLICATION

(21) Application number: 90113818.0

(51) Int. Cl.5: **F16D 3/56**, F16D 3/72

(22) Date of filing: **19.07.90**

(30) Priority: **11.08.89 IT 8346689**

(43) Date of publication of application:
**13.02.91 Bulletin 91/07**

(84) Designated Contracting States:
**AT BE CH DE ES FR GB LI NL**

(71) Applicant: **CTA Srl COMPONENTI PER TECNOLOGIE AVANZATE**
**Zona Industriale**
**I-33026 Paluzza (UD)(IT)**

(72) Inventor: **Kaiser, Siegmund**
Grünewaldstrasse 47
D-7440 Nurtingen(DE)
Inventor: **Mistruzzi, Giampaolo**
Via Sistiana 11
I-33100 Udine(IT)
Inventor: **Di Centa, Ferdinando**
Via Enfretors 26
I-33026 Paluzza (UD)(IT)

(74) Representative: **Petraz, Gilberto Luigi**
**G.L.P. S.a.S. di Gilberto Petraz P.le Cavedalis 6/2**
**I-33100 Udine(IT)**

(54) Multivalent mechanical transmission joint.

(57) Multivalent mechanical transmission joint which comprises two coaxially positioned terminals (11-111) suitable to be coupled to shafts between which a motion has to be transmitted, the two terminals (11-111) being connected to each other by a plurality of single intermediate elements (14) arranged circumferentially in the terminals (11-111) and extending parallel to the axis of the terminals (11-111), each of the intermediate elements (14) being capable of being oriented at an angle to its own axis so as to provide a variable degree of flexibility for the joint (10), the intermediate elements (14) being able to be fitted in various numbers in the same joint (10) so as to cover various ranges of transmissible torque.

fig. 2

## MULTIVALENT MECHANICAL TRANSMISSION JOINT

This invention concerns a multivalent mechanical transmission joint. To be more exact, the invention concerns a joint suitable to vary its degree of flexibility to suit the conditions of its employment.

The state of the art includes a plurality of mechanical joints having various conformations and employed for many purposes. Among these mechanical joints the flexible couplings are normally divided into two main classes, namely the torsionally rigid couplings and the torsionally flexible couplings; the former are able to compensate misalignments which are not of a great value, but maintain torsional rigidity.

To this former class there belong, for instance, the known joints employing teeth, chains, helices, etc.

The torsionally flexible joints, besides the typical properties of the rigid joints, permit relative resilient rotations as between two shafts connected by such flexible joints.

To this latter class there belong, for instance, the known joints employing springs, rubber elements, flexible laminas, etc.

All the joints of the state of the art carry out fully the function for which they have been constructed but only the function of the particular class to which they belong and in respect of relatively restricted ranges of work.

Examples of such joints are to be found in GB-A-2,182,417, CH-A-244.413, FR-A-886.940 and FR-A-2.064.685.

GB-A-2,182,417 discloses a flexible coupling to connect two rotating shafts, the coupling including a pair of axially separated opposed hubs. Each hub is provided with radial grooves to lodge and clamp coordinated rectangular flexible plates located between the two hubs.

CH-A-244.413 discloses a dog clutch in which the coupling elements are conformed as resilient elements so as to transmit motion resiliently in two directions of rotation.

FR-A-886.940 discloses a resilient tubular sleeve consisting of a plurality of resilient elements fixed on one side to a stationary plate and on the other side to a plate to which is applied a load to be compensated.

FR-A-2.064.685 discloses a flexible coupling in which two flanges solidly fixed to a motor means and to a resilient means are coupled by resilient elements fixed within coordinated lodgements included in the flanges. These resilient elements may be bars, laminas, elements wound in a helix, bundles of bars and tubular elements.

The present applicant has designed, embodied and tested a multivalent mechanical joint which is suitable to act torsionally flexibly or torsionally rigidly through various levels of flexibility.

The invention is set forth in the main claim, while the dependent claims describe various features of the invention.

The joint according to the invention comprises two terminals which are metallic or consist of another suitable material and which are positioned coaxially and so shaped that they are connected together by a plurality of single intermediate elements having advantageously a laminar conformation or a conformation which can be likened thereto.

The overall nature of the joint is such as to make it obtain equivalence in the transmission of motion between two shafts, that is to say, for any position given to the shafts connected to such terminals the joint transmits motion with an output speed equal, moment by moment, to the input speed.

Owing to its configuration the joint also enables very great accuracy to be attained.

The single intermediate elements are positioned circumferentially in the two terminals and extend lengthwise in an axial direction.

Within the same joint configuration the single intermediate elements can be fitted in variable numbers to suit the various ranges of torque which can be transmitted by the joint.

These intermediate elements can also be fitted in positions at differing angles to their own lengthwise axis so as to transmit various ranges of torque and to achieve various levels of rigidity in proportion to the misalignment of the shafts connected by the joint.

The single intermediate elements can have various shapes, can consist of a variety of suitable materials and can be produced with widely differing production technologies.

According to a variant the single intermediate elements are supported by an intermediate body that cooperates with the two terminals.

According to another variant the single intermediate elements and the intermediate body consist of one single piece.

According to a further variant the single intermediate elements comprise toothed portions for cooperation with coordinated toothed means which are borne on the terminals and are suitable to obtain differing angular positions of the intermediate elements in relation to the lengthwise axis of the same.

Such alteration of angular position can be obtained by hand or automatically while the joint is halted or in motion.

The joint of the invention enables a plurality of advantages to be achieved from the production and usage points of view since the same joint can be made individually suitable at the last moment or at any other required moment according to the usage involved and the load to be transmitted.

Moreover, the behaviour of the joint under load follows exact laws and can therefore be foreseen beforehand.

Furthermore, the joint of the invention has better characteristics from the point of view of power density than the known joints, power density being meant here as the relationship between the load applied to the joint and its weight.

These and other special features of the invention will be made clearer in the following description.

The attached figures, which are given as a non-restrictive example, show the following:-

Fig. 1 is a partially cutaway and knocked-down three-dimensional view of a joint according to the invention;

Fig. 2 is a partially cutaway and knocked-down three-dimensional view of a variant of the invention;

Fig. 3 is a knocked-down three-dimensional view of one type of embodiment of a single intermediate element according to the invention;

Figs. 4a and 4b show a front view and a lengthwise axial section respectively of a form of embodiment of a single intermediate element;

Fig. 5 is another form of embodiment of a single intermediate element;

Figs. 6 show diagrams of different solutions of the angular positioning of the single intermediate elements;

Fig. 7 gives a diagram of another solution of the angular positioning of the single intermediate elements;

Fig. 8 is a partial three-dimensional view of a variant of the invention;

Figs. 9a and 9b show a front view and a side view respectively of another variant of the invention.

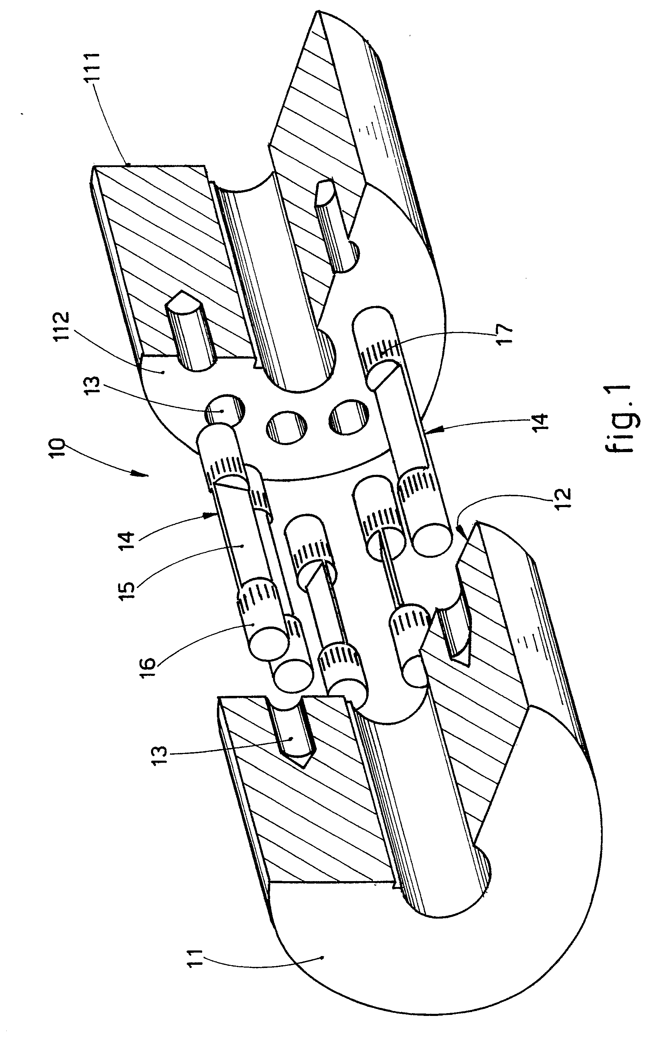

In Fig. 1 a joint 10 according to the invention consists of two terminals 11-111 made of metal or another suitable material and positioned coaxially and capable of being coupled in a known manner to shafts which have to be connected together.

Each terminal 11-111 comprises in its circumference, in a reciprocally coordinated number and position in the two facing frontal surfaces 12-112 of the terminals 11-111, a set of recesses, which in this example are cylindrical holes 13.

The terminals 11-111 are connected together by a plurality of single intermediate elements 14 in a number equal to that of the cylindrical holes 13.

Each intermediate element 14 comprises a body 15 substantially conformed as a lamina and two cylindrical end portions 16 which cooperate with the respective holes 13 included in the frontal surfaces 12-112 of the terminals 11-111.

The single intermediate elements 14 are fitted into the respective holes 13 and have their lengthwise axes parallel to the axis of the joint 10 when so installed.

The assembly of the intermediate elements 14 forms the means to transmit the required torque with characteristics of variable flexibility.

For this purpose the intermediate elements 14 can be provided in a variable number in the same configuration and can be fitted with differentiated angular positions, that is to say, they can be differently rotated in relation to their lengthwise axes.

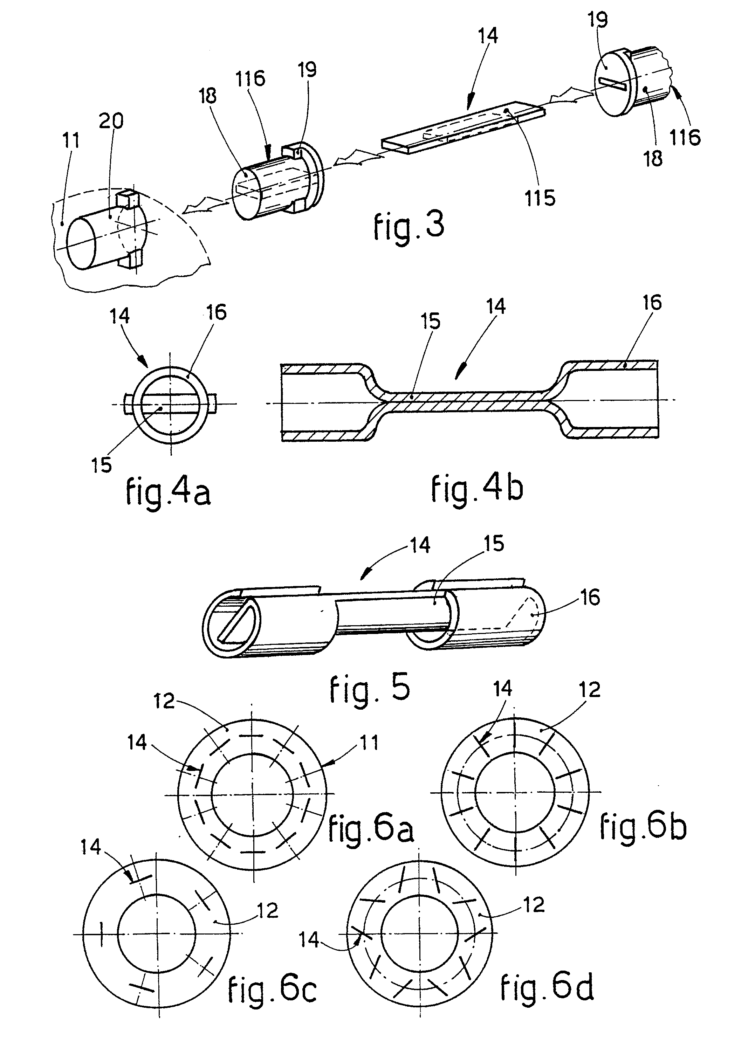

Figs. 6 show diagrams of four possible systems of installation of the single intermediate elements 14. In Fig. 6a each intermediate element 14 is installed in the joint 10 with its body 15 arranged perpendicular to the radius of the terminal 11-111. This is the condition in which the joint 10 possesses properties of greater torsional rigidity.

Fig. 6b shows the opposite case, in which the joint 10 possesses greatest torsional flexibility. In this case the body 15 of each intermediate element 14 is arranged parallel to the radius of the terminal 11-111.

Fig. 6c is a diagram of the embodiment of Fig. 6a but includes a smaller number of single intermediate elements 14 to transmit different ranges of torque.

Fig. 6d is a diagram of an intermediate solution having the intermediate elements 14 arranged at an angle to the radius of the terminal 11-111 and, in this example, arranged at opposite angles to each other in succession.

The cylindrical end portions 16 of each intermediate element 14 may include knurled portions 17 or other equivalent surface features so as to cooperate better with their own seating holes 13.

Fig. 3 shows a variant of the invention, wherein the single intermediate elements 14 consist of a separate body 115 that can be inserted into two end portions 116, which comprise a cylindrical part 18 and a frontal flange 19 for cooperation with a coordinated seating 20 in the terminal 11-111.

The configuration of Fig. 3 provides for a two-positional seating 20, which enables the intermediate element 14 to be rotated by 180° in relation to its axis. Seatings 20 can also be provided which make other rotational positions possible.

The single intermediate elements 14 can be made of various materials, whether metallic or plastic, so as to be suitable for various usage characteristics.

They can also be made with differing production technologies; Figs. 4 show an intermediate element 14 made by processing a tubular metallic tract, whereas Fig. 5 shows an intermediate element 14 made by bending and rolling-up a metallic plate.

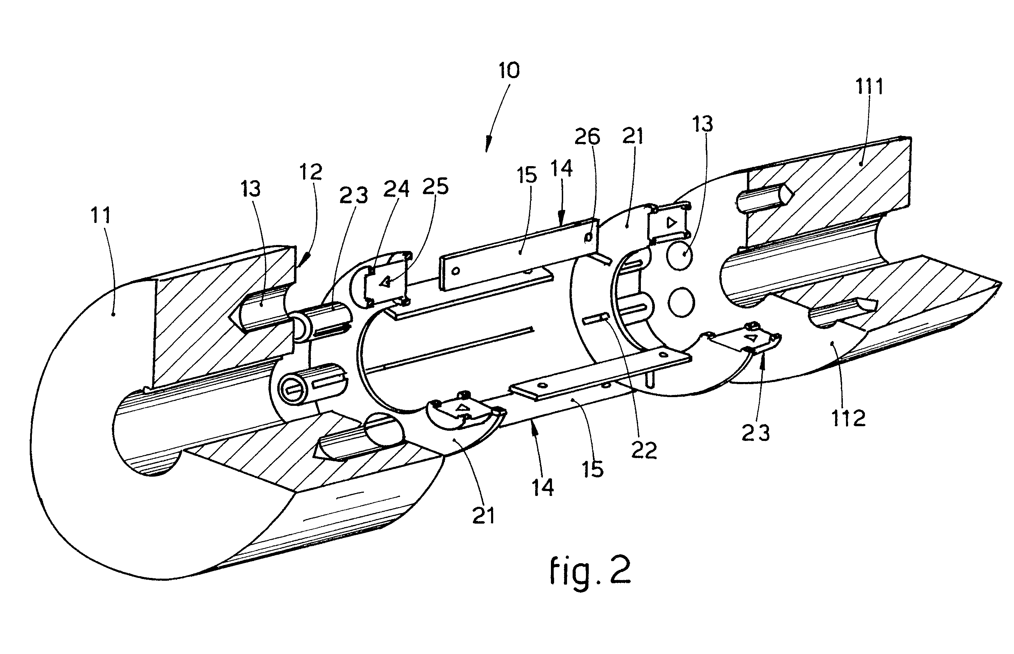

In the variant of the invention shown in Fig.2 the single intermediate elements 14 consist of a lamina body 15 supported by an intermediate means which in this example consists of two rings 21 positioned as counterparts of each other.

These rings 21 comprise, on one face, recesses 22 having a number and size coordinated with the number and size of the single intermediate elements 14 with which they are coupled; on their other face the rings 21 include outwardly cylindrical sleeves 23 communicating with the respective recesses 22 and cooperating with coordinated holes 13 in the installation of the joint 10.

The sleeves 23 are conformed inwardly to lodge the intermediate elements 14 in such a way that the latter 14 cannot rotate during working of the joint 10 and cannot move axially. This latter possibility is prevented by means of a frontal stop 24 and teeth 25 that cooperate with hollows 26 included in the body 15 of the intermediate element 14.

The recesses 22 and sleeves 23 of the rings 21 may be provided to position the intermediate elements 14 at different angles, as shown in Figs. 6, for instance.

The rings 21 and respective intermediate elements 14 form a sub-assembly which can be pre-arranged to achieve considerable advantages during production and replacement of components.

In any event such a configuration makes displacements possible for taking-up axial misalignment, and that sub- assembly can slide axially in relation to the terminals 11-111, if so required.

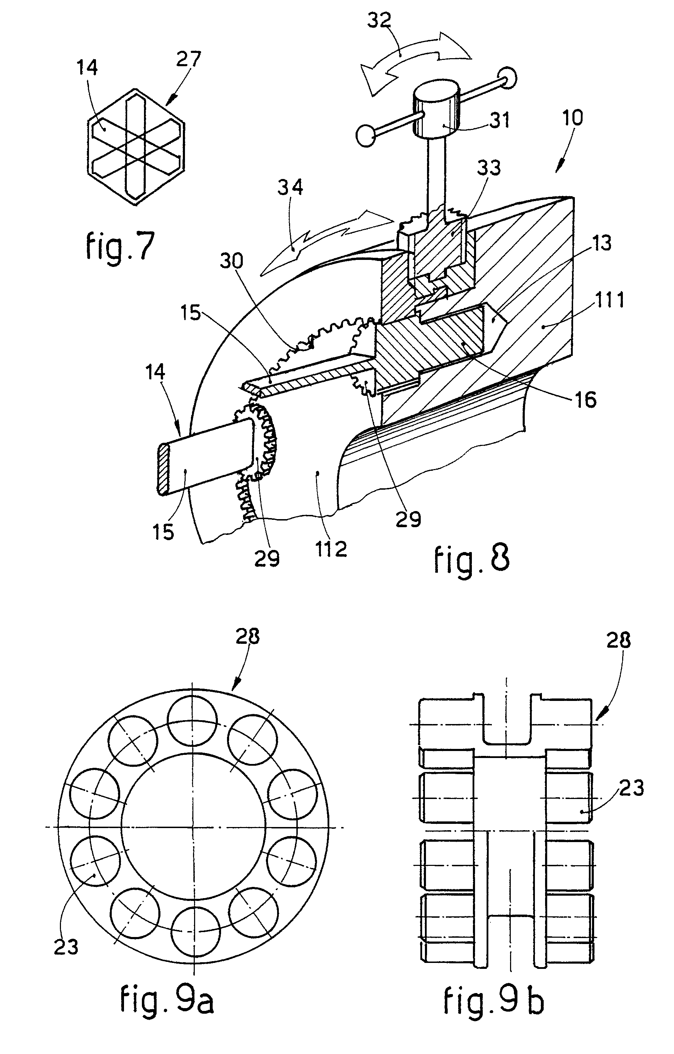

Fig. 7 is a diagram of an embodiment wherein the holes in the terminals 11-111 or sleeves 23 are of a polygonal type, hexagonal 27 in this example, so as to make possible a plurality of positions for the intermediate elements 14.

Figs. 9 show a further variant of the invention in which there is an intermediate body 28 consisting of one single piece 28 advantageously made of a plastic and having a function equivalent to that of the two rings 21 and of the single intermediate elements 14.

Lastly, Fig. 8 shows a form of embodiment of the invention wherein the single intermediate element 14 consists of a body 15 bearing two toothed wheel elements 29 at its ends. These toothed wheel elements 29 cooperate with inwardly toothed rings 30 borne by the two terminals 11-111 respectively.

The relative rotation of the toothed ring 30 and toothed wheel element 29 enables the single intermediate elements 14 to be positioned at an angle, as described earlier.

This relative rotation can be carried out also with the joint assembled, as shown in Fig .8 as an example, by means of a handwheel 31 operated by hand according to the arrows 32.

The handwheel 31 bears at its end a toothed pinion 33, which meshes with a coordinated toothed tract located on the outside of the toothed ring 30 and sets the latter 30 in rotation according to the arrows 34.

In this way the intermediate element 14 can rotate with its cylindrical end portion 16 within the hole 13 so as to take up a new angular position. Such rotation can also be carried out automatically, in accordance with predetermined laws and even with the joint in movement, by means of a suitable external system.

The joint 10 of the invention can be sheathed with a suitable protective means, not shown in the figure, such as a sleeve of rubber or another material which can also form part of the intermediate transmission body.

We have described here some preferred embodiments of the invention, but many variants will be possible for a person skilled in this field without departing thereby from the scope of the invention as defined in the claims.

## Claims

1 - Multivalent mechanical transmission joint which comprises two coaxially positioned terminals (11-111) suitable to be coupled to shafts between which a motion has to be transmitted, the joint (10) being characterized in that the two terminals (11-111) are connected to each other by a plurality of single intermediate elements (14) arranged circumferentially in the terminals (11-111) and extending parallel to the axis of the terminals (11-111), each of the intermediate elements (14) being capable of being oriented at an angle to its own axis so as to provide a variable degree of flexibility for the joint (10), the intermediate elements (14) being able to be fitted in various numbers in the same joint (10) so as to cover various ranges of transmissible torque.

2 - Joint (10) as claimed in Claim 1, in which each single intermediate element (14) consists of a central body (15-115) shaped as a lamina or with another form which can be likened thereto, and of two end portions (16-116) that cooperate with coordinated holes (13) included in the terminals (11-111).

3 - Joint (10) as claimed in Claim 1, in which each single intermediate element (14) is a lamina (15-115).

4 - Joint (10) as claimed in Claim 1 or 2, in which each single intermediate element (14) consists of one single piece (Figs. 1, 4 and 5).

5 - Joint (10) as claimed in Claim 1 or 2, in which each single intermediate element (14) consists of a plurality of parts (Fig. 3).

6 - Joint (10) as claimed in any claim hereinbefore, in which the single intermediate elements (14) are supported on intermediate means (21) that cooperate with the terminals (11-111).

7 - Joint (10) as claimed in Claim 6, in which the intermediate means consist of two rings (21) with elements (23) to cooperate with the respective holes (13) in the terminals (11-111).

8 - Joint (10) as claimed in Claim 1, in which the single intermediate elements (14) form one single intermediate body (28) comprising elements (23) for cooperation with the respective holes (13) in the terminals (11-111).

9 - Joint (10) as claimed in any claim hereinbefore, in which such cooperation elements (23) comprise means (24-25) to retain the respective single intermediate elements (14).

10 - Joint (10) as claimed in any claim hereinbefore, in which each single intermediate element (14) comprises toothed elements (29) that cooperate with toothed means (30) borne on the terminals (11-111).

11 - Joint (10) as claimed in Claim 10, which comprises manually operated means (31-33) for reciprocal rotation of the toothed elements (29) and toothed means (30).

12 - Joint (10) as claimed in Claim 10, which comprises automatic means for automatic reciprocal rotation of the toothed elements (29) and toothed means (30).

fig.1

fig. 2

EP 0 412 334 A1

fig.3

fig.4a

fig.4b

fig. 5

fig.6a

fig.6b

fig.6c

fig.6d

fig.7

fig. 8

fig. 9a

fig. 9 b

## DOCUMENTS CONSIDERED TO BE RELEVANT

| Category | Citation of document with Indication, where appropriate, of relevant passages | Relevant to claim | CLASSIFICATION OF THE APPLICATION (Int. Cl.5) |
|---|---|---|---|
| D,A | GB-A-2 182 417  (WESTINGHOUSE)<br>* Whole document *<br>— — — | 1,2,3,5 | F 16 D 3/56<br>F 16 D 3/72 |
| D,A | CH-A-2 444 13  (BROWN, BOVERI)<br>* Page 2, lines 13-17; fig. *<br>— — — | 1,8,10 | |
| D,A | FR-A-8 869 40  (HAMEL)<br>* Page 1, lines 16-18; fig. *<br>— — — | 1 | |
| D,A | FR-A-2 064 685  (GAILLARD)<br>— — — — — | | |

|  | TECHNICAL FIELDS SEARCHED (Int. Cl.5) |
|---|---|
|  | F 16 D |

The present search report has been drawn up for all claims

| Place of search | Date of completion of search | Examiner |
|---|---|---|
| The Hague | 31 October 90 | ORTHLIEB CH.E. |